# EUROPÄISCHE PATENTSCHRIFT

(11) **EP 3 477 175 B1**
(45) Veröffentlichungstag und Bekanntmachung des Hinweises auf die Patenterteilung: **07.07.2021**
(21) Anmeldenummer: 17020491.1
(22) Anmeldetag: 24.10.2017
(51) Int. Cl.: F16L 5/10, E04G 15/06, E04C 2/52, H02G 3/12

(54) **VERWENDUNG EINES EINBAUTEILS UND EINES ROHRELEMENTS ZU EINBAUEN IN EIN WAND- ODER BODENELEMENT**
USE OF AN INSERTED ELEMENT AND A PIPE ELEMENT TO BE INSERTED IN A WALL OR FLOOR ELEMENT
UTILISATION D'UNE PIÈCE ENCASTRÉE ET D'UN ÉLÉMENT TUBULAIRE DESTINÉS À ÊTRE ENCASTRÉS DANS UN ÉLÉMENT DE MUR OU DANS UN ÉLÉMENT DE SOL

(43) Veröffentlichungstag der Anmeldung: 01.05.2019
(73) Patentinhaber: Hauff-Technik GmbH & Co. KG, 89568 Hermaringen (DE)
(72) Erfinder: Delikostas, Christos, 89537 Giengen (DE); Egritepe, Senol, 89520 Heidenheim (DE)
(74) Vertreter: König Szynka Tilmann von Renesse Patentanwälte Partnerschaft mbB

(56) Entgegenhaltungen:
- EP-A1- 2 851 488
- EP-A1- 2 887 478
- DE-U1-202014 003 306
- US-A- 4 380 348

## Beschreibung

Die vorliegende Erfindung betrifft die Verwendung eines Einbauteils und eines Rohrelements zum gemeinsamen Einbauen in ein Wand- oder Bodenelement.

Das Einbauen erfolgt durch Umfüllen mit einem Umfüllmaterial, in der Regel durch Vergießen mit Beton. Dabei wird im Zuge des Vergießens vielfach das Wand- oder Bodenelement auch erst hergestellt, das Rohrelement mit dem Einbauteil wird also bspw. einer Schalung bzw. Armierung oder dergleichen befestigt und dann mit Beton umfüllt. Nachdem dieser gehärtet ist, kann die Schalung entfernt werden und verbleibt das Wand- oder Bodenelement. Dies soll den vorliegenden Gegenstand illustrieren, ihn aber zunächst nicht in seiner Allgemeinheit beschränken.

Die EP 2 851 488 A1 zeigt ein Aufsetzteil, das mittels einer Spannschelle auf einem Spitzende eines KG-Rohres befestigt wird. In einer Variante ist ein Rohrabschnitt des Aufsetzteils, der angedrückt wird, aus einer Hart- und einer Weichkomponente aufgebaut, welche die Hartkomponente umschließt.

Die US 4,380,348 betrifft einen Rohrverbinder mit einer Neoprenhülse, auf die ein in bestimmten Varianten geschlitztes Metallband gesetzt wird.

Die EP 2 887 478 A1 betrifft einen Trichter, der mittels eines Elastomerkörpers an einem Muffenende eines KG-Rohres montiert wird. Die DE 20 2014 003 306 U1 betrifft eine Durchführung, die aus mehreren, zueinander mehrteiligen Einzelteilen aufgebaut wird.

Der vorliegenden Erfindung liegt das technische Problem zugrunde, ein besonders vorteilhaftes Einbauteil als Gegenstand der Verwendung anzugeben, das dann gemeinsam mit dem Rohrelement durch Vergießen mit zunächst fließfähigem und dann erstarrendem Verfüllmaterial in das Wand- oder Bodenelement eingebaut wird.

Erfindungsgemäß wird dies mit einer Verwendung gemäß Anspruch 1 gelöst. Das Einbauteil weist also einen Rohrstutzen auf, der aus einem Formteil und einem demgegenüber weicheren und mit dem Formteil einstückigen Verformungselement aufgebaut ist. Das Formteil gliedert sich bezogen auf eine Rohrachse des Rohrstutzens umlaufend in eine Mehrzahl Spannabschnitte und ist jeweils zwischen den Spannabschnitten durch eine Trennfuge unterbrochen. Aufgrund der Trennfugen sind die Spannabschnitte jeweils zumindest ein Stück weit radial auslenkbar. Dabei ist das Verformungselement derart vorgesehen, dass es sich, jeweils radial betrachtet, jeweils zumindest bereichsweise über eine jeweilige Trennfuge hinweg erstreckt.

Aufgrund ihrer radialen Auslenkbarkeit können einerseits die Spannabschnitte bspw. beim Einschieben des Rohrelements ein Stück weit nach außen gedrückt werden, was das Einschieben erleichtern kann (im Vergleich zu einem Formteil ohne Trennfugen). Andererseits kann dabei das einstückig mit dem Formteil ausgebildete Verformungselement bspw. gleichwohl eine gewisse Rückstellkraft auf die Spannabschnitte bewirken (im Vergleich zu einem Rohrstutzen ohne Verformungselement). In allgemeineren Worten lassen sich mit der erfindungsgemäßen Merkmalskombination die Vorteile eines steiferen Formteils (Stabilisierungsfunktion, siehe unten) mit jenen eines weicheren Verformungselements verbinden, das sich infolge seiner elastischen Eigenschaften gewissermaßen selbsttätig anlegt.

Bevorzugte Ausführungsformen finden sich in den abhängigen Ansprüchen und der gesamten Offenbarung, wobei in der Darstellung nicht immer im Einzelnen zwischen unterschiedlichen Anspruchskategorien unterschieden wird; jedenfalls implizit ist die Offenbarung hinsichtlich sämtlicher Anspruchskategorien zu lesen.

Bei der erfindungsgemäßen Verwendung werden das Rohrelement und das Einbauteil in zusammengesetzter Form in das Wand- oder Bodenelement eingebaut, ist dabei also das Rohrelement in dem Rohrstutzen des Einbauteils angeordnet. Diese zusammengesetzte Anordnung wird dann mit zunächst fließfähigem und dann erstarrendem Umfüllmaterial umfüllt, bevorzugt mit Beton vergossen, also einbetoniert. Bevorzugt umschließt das Umfüllmaterial nach dem Vergießen bzw. Umfüllen jedenfalls den Rohrstutzen des Einbauteils vollständig umlaufend, fasst es den Rohrstutzen also hinsichtlich sämtlicher Radialrichtungen nach außen ein. Dies illustriert die Bedeutung des im Vergleich zum Verformungselement weniger weichen (steiferen) Formteils, das etwa dem Druck des noch flüssigen Betons gut standhalten kann; es kann z. B. wie im Falle des Ausführungsbeispiels eine Ausnehmung um das Ende des Rohrelements freihalten. Das Umfüllmaterial ist generell bevorzugt auf Zementbasis vorgesehen, es kann sich bspw. auch um einen Quellvergussmörtel handeln. Bevorzugt ist Beton.

Bevorzugt ist das Formteil aus einem Kunststoffmaterial vorgesehen, bspw. mit Polycarbonat, Polyamid, Polystyrol, Polymethylmethacrylat, Polyethylenterephthalat, Polybutylenterephthalat, Acrylester-Styrol-Acrylnitril beziehungsweise Styrol-Acrylnitril als Bestandteil. Vorzugsweise ist das Formteil aus Acrylnitril-Butadien-Styrol (ABS) vorgesehen, besonders bevorzugt besteht es ausschließlich daraus. Ein Formteilmaterial, aus welchem das formgebende Formteil gebildet ist, kann bspw. eine Shore-Härte (Shore D) von mindestens 70 Shore, 75 Shore bzw. 80 Shore haben, mit möglichen (davon unabhängigen) Obergrenzen bei bspw. höchstens 95 Shore bzw. 90 Shore.

Das Verformungselement ist weicher als das Formteil, ein das Verformungselement bildendes Verformungselementmaterial hat also eine geringere Shore-Härte als das Formteilmaterial. Dabei ist ein Vergleich auf derselben Shore-Skala mitunter gar nicht mehr möglich, wenn nämlich das Verformungselementmaterial nur sinnvoll nach Shore A vermessen werden kann (und das Formteil nur nach Shore D). In absoluten Werten kann das Verformungselementmaterial bspw. eine Shore-Härte (Shore A) von mindestens 50 Shore, 55 Shore, 60 Shore bzw. 65 Shore und (davon unabhängig) nicht mehr als 85 Shore, 80 Shore bzw. 75 Shore haben. Im Allgemeinen ist als Verformungselementmaterial bspw. auch ein Gummimaterial wie z. B. synthetischer Kautschuk denkbar, bevorzugt ist ein thermoplastischer Elastomer, etwa TPE bzw. TPS.

Infolge der "einstückigen" Ausgestaltung sind das Formteil und das Verformungselement nicht zerstörungsfrei voneinander trennbar, also nicht ohne Zerstörung von einem der beiden oder gegebenenfalls einer Grenzschicht dazwischen. Im Allgemeinen können das Formteil und das Verformungselement auch fügeverbunden sein (der Klebstoff würde die Grenzschicht dazwischen bilden), bevorzugt sind sie direkt aneinander angeformt. Das Verformungselement kann im Allgemeinen bspw. auch aufextrudiert sein, bevorzugt ist das Einbauteil ein Mehrkomponenten-Spritzgussteil (das Formteil- und das Verformungselementmaterial stellen unterschiedliche Komponenten dar).

Insgesamt, also bezogen auf einen vollständigen Umlauf, gliedert sich das Formteil in eine Mehrzahl Spannabschnitte und gibt es entsprechend eine Mehrzahl Trennfugen. "Mehrzahl" meint insoweit zumindest zwei, wobei mindestens drei, vier, fünf, sechs, sieben, acht, neun bzw. zehn in der Reihenfolge der Nennung zunehmend bevorzugt sind. Davon unabhängige Obergrenzen können bspw. bei höchstens 100, 80, 60, 40 bzw. 30 liegen. Die Richtungsangaben, also "axial"/ "Axialrichtung", "radial"/"Radialrichtung" bzw. "umlaufend"/"Umlaufrichtung" beziehen sich ohne ausdrücklich gegenteilige Angabe stets auf die Rohrachse des Rohrstutzens, was ebenso für "innen" und "außen" gilt, es ist also z. B. eine "Innenwandfläche" der Rohrachse zu- und eine "Außenwandfläche" abgewandt.

Sind das Einbauteil und das Rohrelement zusammengesetzt, kann die Rohrachse des Rohrstutzens mit einer Rohrachse des Rohrelements zusammenfallen. Im Allgemeinen muss die Bezugnahme auf einen Radius bzw. Umlauf etc. nicht zwingend eine Kreisform implizieren, kann der Rohrstutzen also in einer zu seiner Rohrachse senkrechten Schnittebene betrachtet bspw. auch einen eckigen Querschnitt haben, bspw. mit abgerundeten Ecken. Bevorzugt ist gleichwohl eine Kreisform und ist die Rohrachse des Rohrstutzens dann eine Symmetrieachse für eine Dreh- bzw. insbesondere Rotationssymmetrie. Es können bspw. die Spannabschnitte um die Rohrachse des Rohrstutzens zueinander drehsymmetrisch sein. In einem von den Trennfugen freien Axialabschnitt kann das Formteil dann bspw. auch rotationssymmetrisch sein (um die Rohrachse).

Das Einbauteil und das Rohrelement werden in zusammengesetzter Form in das Wand- oder Bodenelement eingebaut. Sie können bereits werkseitig zusammengesetzt, dabei aber noch in gewissem Rahmen relativ zueinander verschiebbar sein, sodass bspw. eine Anpassung an die Abmessungen des Wand- oder Bodenelements möglich ist. Das Rohrelement und das Einbauteil können dann bspw. gemeinsam eine Durchführung bilden, durch welche dann erst später (nach dem Aushärten des Umfüllmaterials) die eigentliche Leitung verlegt wird; das Einbauteil kann sich dann bevorzugt auch über den Rohrstutzen hinaus rohrförmig erstrecken. Eine entsprechende Durchführung kann dann eine axiale Gesamtlänge haben, die größer als die jeweilige axiale Länge des Rohrelements und des Einbauteils jeweils für sich ist.

Bevorzugt ist das Rohrelement selbst die medienführende Leitung, insbesondere eine Wasserleitung, bevorzugt ein Abwasserrohr. Das Einbauteil und das Rohrelement können bspw. auch erst vor Ort auf der Baustelle, also vor bzw. beim Montieren an der Schalung zusammengesetzt werden, und das Zusammensetzen soll ausdrücklich auch als möglicher Gegenstand der Verwendung offenbart sein. Der eingangs genannte Vorteil, also die vom Verformungselement unterstützte Rückstellfunktion der Spannabschnitte, kann selbstverständlich im Besonderen beim Einschieben des Rohrelements in den Rohrstutzen zum Tragen kommen. Im Allgemeinen können die Spannabschnitte mit auferlegter Rückstellfunktion aber auch bei einem bloßen Relativversetzen vorteilhaft sein, weil die Spannabschnitte dieses einerseits vereinfachen bzw. erst ermöglichen können ("Relativversatzfunktion"), andererseits aber die Rückstellfunktion gleichwohl eine gute Stabilität ergibt.

Über eine jeweilige Trennfuge erstreckt sich das Verformungselement zumindest bereichsweise hinweg, also jedenfalls über einen Teil davon, bevorzugt über die gesamte Trennfuge. Die Erstreckung des Verformungselements "über die Trennfuge hinweg" bezieht sich dabei jeweils auf eine radiale Ansicht der jeweiligen Trennfuge; das Verformungselement kann sich im Allgemeinen auch ein Stück weit radial innerhalb und/oder radial außerhalb der Trennfuge über diese hinweg erstrecken.

In bevorzugter Ausgestaltung erstreckt sich das Verformungselement zumindest anteilig auch jeweils in den Trennfugen. Das Verformungselement füllt eine jeweilige Trennfuge dann also zumindest teilweise, bevorzugt vollständig aus (jeweils in Umlaufrichtung). Als "Trennfuge" wird insoweit ein Bereich verstanden, der von den seitlichen Flanken zweier nächstbenachbarter Spannabschnitte in Umlaufrichtung eingefasst wird. In anderen Worten, stellt man sich vor, dass die Trennfugen in ein zuvor umlaufend durchgehendes Formteil durch Entfernen entsprechender Bereiche eingebracht werden, ist dann in diesen Bereichen das Verformungselement angeordnet (jedenfalls Teile des Verformungselements, nicht zwingend das gesamte Verformungselement).

Bei einer bevorzugten Ausführungsform erstrecken sich die Trennfugen jeweils axial bis zu einem Ende des Formteils, sind die Spannabschnitte also an diesem axialen Ende freitragend ausgeführt (bei Betrachtung des Formteils für sich). Dies kann insbesondere das Einschieben des Rohrelements in dieses axiale Ende vereinfachen, der Rohrstutzen kann dort ein wenig aufgeweitet werden. Im Allgemeinen sind aber freitragende Spannabschnitte nicht zwingend, sondern kann auch eine steg- bzw. brückenförmige Ausgestaltung (bedingt durch Trennfugen axial innerhalb des Formteils, die zu dessen Enden beabstandet enden) von Vorteil sein, insbesondere mit Blick auf die Relativversatzfunktion. Auch Stege bzw. Brücken lassen sich ein Stück weit radial auslenken und können so ein Relativverschieben von Einbauteil und Rohrelement vereinfachen.

Bei einer bevorzugten Ausführungsform haben die Trennfugen jeweils die Form eines durchgehenden Schlitzes. Soweit generell die Trennfugen bzw. Spannabschnitte beschrieben werden, wird ohne ausdrücklich gegenteilige Angabe das Formteil für sich betrachtet. Im Allgemeinen kann das Formteilmaterial im Bereich einer Trennfuge bspw. auch noch eine gitter- bzw. netzartige Struktur bilden, kann das Formteil dort also geschwächt, wenngleich nicht durchgehend unterbrochen sein; die Spannabschnitte wären gleichwohl radial auslenkbar.

Bevorzugt sind die Trennfugen indes unterbrechungsfrei durchgehende Schlitze, was sich sowohl auf ihre radiale als auch axiale Erstreckung bezieht. Im Allgemeinen können sich die Schlitze dabei zusätzlich auch in Umlaufrichtung erstrecken, insbesondere auch einen gekrümmten Verlauf haben (jeweils bezogen auf ihre Längenerstreckung, also entlang ihrer Schlitzlinie). Bevorzugt sind sich im Gesamten geradlinig erstreckende Schlitze, besonders bevorzugt sich ausschließlich axial erstreckende Schlitze. Dies bezieht sich auf die Längenerstreckung entlang der Schlitzlinie, senkrecht dazu können die Schlitze selbstverständlich eine Weitenerstreckung haben (die dann in Umlaufrichtung liegt).

Bei einer bevorzugten Ausführungsform erstreckt sich das Verformungselement vollständig umlaufend und dabei zumindest anteilig auch radial innerhalb der Spannabschnitte über diese hinweg. Im Allgemeinen ist hingegen auch ein ausschließlich in den Trennfugen angeordnetes, für sich betrachtet insoweit mehrteiliges Verformungselement denkbar. Im Falle der bevorzugten, umlaufend durchgehenden Ausgestaltung könnte sich das Verformungselement zusätzlich zur Erstreckung radial innerhalb auch radial außerhalb der Spannabschnitte erstrecken, könnten diese also sogar auch von dem Verformungselement vollständig "eingepackt" sein. Bevorzugt sind die Außenwandflächen der Spannabschnitte jedoch verformungselementfrei (ist dort kein Verformungselement angeordnet). Das vollständig umlaufende Verformungselement kann vorteilhafterweise auch eine Dichtfunktion erfüllen, also das Einbauteil zum Rohrelement hin dichten. So kann bspw. beim Einbau einem Eindringen von flüssigem Umfüllmaterial vorgebeugt werden und lassen sich auch danach Kriechpfade für Feuchtigkeit verlängern bzw. blockieren.

In bevorzugter Ausgestaltung bildet das Verformungselement einen nach radial innen hervortretenden Dichtsteg, insbesondere einen umlaufend in sich geschlossenen Dichtsteg. Der Dichtsteg ist nach Art eine Dichtlippe axial begrenzt, kann also bspw. axial deutlich kürzer als die Erstreckung des Verformungselements im Bereich einer Trennfuge sein, etwa höchstens 30 %, 20 % bzw. 10 % davon ausmachen, mit möglichen (davon unabhängigen) Untergrenzen bei bspw. mindestens 0,01 %, 0,05 %, 0,1 %, 0,5 % bzw. 1 %.

Bevorzugt sind mehrere Dichtstege vorgesehen (jeweils umlaufend in ich geschlossen), also mindestens zwei und (davon unabhängig) bspw. nicht mehr als acht, sechs bzw. vier Dichtstege. Generell sind "ein" und "eine" im Rahmen dieser Offenbarung als unbestimmte Artikel und damit ohne ausdrücklich gegenteilige Angabe immer auch als "mindestens ein" und "mindestens eine" zu lesen.

Bei einer bevorzugten Ausführungsform steht die in Umlaufrichtung genommene Weite zumindest einer Trennfuge zur ebenfalls in Umlaufrichtung genommenen Weite zumindest eines Spannabschnitts in einem Verhältnis von mindestens 1:5, weiter und besonders bevorzugt mindestens 2:5 bzw. 3:5. Mögliche Obergrenzen können bspw. bei höchstens 3:1, weiter und besonders bevorzugt höchstens 3:2 bzw. 1:1 liegen, wobei Ober- und Untergrenzen im Allgemeinen auch unabhängig voneinander von Interesse sein können und offenbart sein sollen. Ein entsprechendes Weitenverhältnis gilt zunächst für zumindest einen Spannabschnitt und zumindest eine Trennfuge, weiter bevorzugt für mindestens 1/3 bzw. 2/3 der Trennfugen und Spannabschnitte untereinander, besonders bevorzugt für sämtliche Trennfugen und Spannabschnitte. Im Allgemeinen wird als Weite der jeweiligen Trennfuge bzw. des jeweiligen Spannabschnitts ein über dessen Längenerstreckung gebildeter Mittelwert zugrunde gelegt. Bevorzugt haben die Trennfugen und Spannabschnitte jeweils eine über ihre jeweilige Längenerstreckung konstante Weite. Mit einem vorstehend konkretisierten Weitenverhältnis lässt sich ein guter Kompromiss aus Aufsetz-/Versetzbarkeit einerseits und Stabilität andererseits erreichen.

Bei einer bevorzugten Ausführungsform hat zumindest einer der Spannabschnitte eine axiale Erstreckung, die mindestens dem 0,05-fachen eines Außendurchmessers des Rohrelements entspricht, mit weiteren in der Reihenfolge der Nennung zunehmend bevorzugten Untergrenzen bei mindestens dem 0,1-fachen, 0,15-fachen bzw. 0,2-fachen. Mögliche Obergrenzen liegen bei in der Reihenfolge der Nennung zunehmend bevorzugt höchstens dem 2-fachen, 1,5-fachen, 1-fachen, 0,8-fachen, 0,6-fachen, 0,4-fachen bzw. 0,3-fachen, wobei Ober- und Untergrenzen wiederum im Allgemeinen auch unabhängig voneinander von Interesse sein können und offenbart sein sollen. Mit einer entsprechenden Geometrie lässt sich ein guter Kompromiss aus Flexibilität und Stabilität erreichen. Weist das Rohrelement eine Muffe auf, was bevorzugt ist (siehe unten), wird der Außendurchmesser in einem muffenfreien Abschnitt des Rohrelements zugrunde gelegt. Generell sitzt der Rohrstutzen mit den Spannabschnitten im Falle eines Rohrelements mit Muffe auf einem muffenfreien Abschnitt davon. Der Außendurchmesser des Rohrelements entspricht im Wesentlichen dem Innendurchmesser des Rohrstutzens des Einbauteils.

Bei einer bevorzugten Ausführungsform ist an einer Außenwandfläche des Rohrstutzens ein Spannring angeordnet, mit dem die Spannabschnitte nach radial innen, zum Rohrelement hin angedrückt werden. Die angedrückten Spannabschnitte müssen dabei nicht zwingend am Rohrelement anliegen, dazwischen kann noch das Verformungselement angeordnet sein (siehe vorne). "Spannring" meint ganz allgemein ein Bauteil, dessen Innendurchmesser sich auf eine Betätigung hin verringern lässt. Im Allgemeinen kann bspw. auch ein Schnellspanner vorgesehen sein, der zum Beispiel über einen Exzenterhebel betätigt wird; bevorzugt ist eine Spannschelle, deren Durchmesserveränderung durch Drehen einer Schraube verändert wird.

Bevorzugt ist an einer Außenwandfläche des Rohrstutzens ein Anschlag ausgebildet, der einen Axialversatz des Spannrings begrenzt, auch wenn dieser noch unverspannt ist. Bevorzugt gibt es für beide Axialrichtungen jeweils einen solchen Anschlag, besonders bevorzugt bildet einen davon das Formteil und den anderen das Verformungselement. Im Falle der Spannabschnitte mit freitragendem Ende (siehe vorne) bildet bevorzugt das Verformungselement den Anschlag an diesem freitragenden Ende, und zwar an einem in der Trennfuge angeordneten Abschnitt des Verformungselements. Dies kann bspw. insoweit vorteilhaft sein, als dieser Abschnitt dann beim Spannen ein Stück weit zusammen- und damit nach außen gedrückt wird, womit auch der Anschlag ein Stück weit nach außen gedrückt wird und den Spannring noch immer sicher in Position hält.

Bei einer bevorzugten Ausführungsform ist das Einbauteil ein Mehrkomponenten-Spritzgussteil und sind das Formteil und das Verformungselement aus unterschiedlichen Komponenten spritzgegossen. Bezüglich möglicher Materialien wird auch auf die vorstehenden Anmerkungen verwiesen, bevorzugt ist das Verformungselement aus einem thermoplastischen Elastomer und/oder das Formteil aus Acrylnitril-Butadien-Styrol (ABS) spritzgegossen.

Wie bereits eingangs erwähnt, kann das Formteil nach dem Einbau in das Wand- oder Bodenelement unterschiedliche Funktionen erfüllen, nämlich zunächst schlichtweg als Rohrstück zusammen mit dem Rohrelement eine Durchgangsöffnung in den in dem Umfüllmaterial freihalten, also eine Durchführung bilden. Das Formteil kann bspw. auch einen sich relativ zum Rohrstutzen nach radial außen weg erhebenden, umlaufenden Steg bilden, der dann von dem Umfüllmaterial umschlossen wird. Dieser Steg kann bspw. der Verankerung in dem Umfüllmaterial dienen, insbesondere aber auch Kriechpfade für Feuchtigkeit bzw. Wasser entlang der Außenfläche des Rohrelements zumindest verlängern bzw. auch vollständig blockieren. Bezogen auf eine axiale Länge der Spannabschnitte kann sich der Steg bspw. um mindestens das 1-fache, 1,5-fache bzw. 2-fache davon nach radial außen vom Rohrstutzen weg erheben (mögliche Obergrenzen können bei höchstens dem 20-, 15-, 10- bzw. 5-fachen liegen). Ein solches Einbauteil kann dann dem Rohrstutzen mit den Spannabschnitten entgegengesetzt bevorzugt einen weiteren Rohrstutzen aufweisen, der vorzugsweise ebenfalls in Spannabschnitte untergliedert ist.

Es liegt dann der eine Rohrstutzen axial auf der einen Seite des Stegs und der weitere Rohrstutzen axial auf der anderen Seite davon. Ein Einbauteil mit Steg kann dann bspw. auch derart auf das Rohrelement aufgeschoben werden, dass es zu dessen Enden beabstandet darauf sitzt, also in einem eher mittigen Bereich davon angeordnet ist (in anderen Worten verlängert das aufgesetzte Einbauteil das Rohrelement axial nicht). Auf diese Weise lässt sich vergleichsweise einfach eine Dichtung an dem Rohrelement montieren, bevorzugt wird ein solches Einbauteil dann nicht nochmals gesondert mit einem Spannring angedrückt, wird es also spannringfrei gemeinsam mit dem Rohrelement einbetoniert. Aus dem Verformungselementmaterial können an dem Steg, welchen das Formteilmaterial bildet, bspw. zusätzlich umlaufende Dichtstege bzw. Dichtrillen angeformt sein, insbesondere an den axialen Stirnseiten des Stegs. Dies kann die Abdichtwirkung weiter verbessern helfen (das weichere Verformungselementmaterial kann einen gewissen Schrumpf des Umfüllmaterials beim Aushärten ausgleichen).

Bei einer bevorzugten Ausführungsform hält das Einbauteil in dem erstarrten Umfüllmaterial eine Ausnehmung frei, die an eine Seitenfläche des Wand- oder Bodenelements grenzt und deren Durchmesser um mindestens 30 % größer als ein Außendurchmesser des Rohrelements ist. An seinem dem Rohrstutzen axial entgegengesetzten Ende hat das Einbauteil also einen entsprechend größeren Außendurchmesser, es bildet eine Trichterform. Die davon freigehaltene Ausnehmung kann bspw. insoweit vorteilhaft sein, als darin eine Leitung, insbesondere ein Rohrstück, das zur Verlängerung des Rohrelements nach dem Umfüllen bzw. Vergießen an dieses angeschlossen wird, mit etwas Spiel geführt ist, was eine schräge Leitungsführung bzw. einen Versatzausgleich ermöglichen kann. Bevorzugt ist das Rohrelement ein Abwasserrohr, insbesondere ein KG-Rohr.

Bevorzugt wird das Einbauteil an das Ende des Rohrelements gesetzt, besonders bevorzugt an ein Muffenende. Das Ende des Rohrelements liegt dann, von der Ausnehmung abgesehen, innerhalb des Wand- oder Bodenelements; die Ausnehmung erstreckt sich von dem Muffenende zur Seitenfläche des Wand- oder Bodenelements. Die Ausnehmung kann insbesondere so viel Raum bieten, dass sich auch ein Rohrbogen in das Muffenende einsetzen und in der Ausnehmung führen lässt. Bevorzugt wird das Rohrelement nach dem Einbau mit zwei Rohrbögen desselben Winkels verlängert, sodass ein Versatz senkrecht zur Längsrichtung des Rohrelements ausgeglichen wird.

Dies kann insbesondere im Falle einer Bodenplatte (als Bodenelement) von Interesse sein, auf der anschließend im Zuge der Gebäudeherstellung ein Wandelement errichtet wird. Vor dem Gießen der Bodenplatte, wenn also das Rohrelement mit dem Einbauteil platziert und horizontal eingerichtet wird, ist die exakte Position des dann erst deutlich später errichteten Wandelements teils noch nicht bekannt bzw. zumindest schwer zu berücksichtigen. Dementsprechend kann das Rohrelement dann etwas zu nah oder zu weit weg von dem Wandelement aus der Bodenplatte treten. In der Ausnehmung lässt sich ein solcher Horizontalversatz dann vorteilhafterweise noch innerhalb des eigentlichen Bodenaufbaus korrigieren, was schon optisch vorteilhaft ist und auch Stolperfallen etc. vermeiden hilft.

Mit Blick auf möglichst viel Spielraum beim Versatzausgleich soll der Durchmesser der Ausnehmung um in der Reihenfolge der Nennung zunehmend bevorzugt mindestens 30 %, 40 %, 50 %, 60 %, 70 %, 80 %, 90 % bzw. 100 % größer als der Außendurchmesser des Rohrelements sein. Mögliche Obergrenzen liegen (davon unabhängig) bspw. bei höchstens 500 %, 400 % bzw. 300 %. Betrachtet wird der Durchmesser des Rohrelements dort, wo der Rohrstutzen mit den Spannabschnitten darauf sitzt. Der Durchmesser der Ausnehmung wird an der Seitenfläche des Wand- oder Bodenelements genommen.

Bei einer bevorzugten Ausführungsform bildet das Formteil einen trichterförmigen Hohlkörper, der sich von dem Rohrstutzen weg weitet und die Ausnehmung freihält. Wenngleich im Allgemeinen auch ein Vollkörper die Ausnehmung freihalten könnte, kann der Hohlkörper bspw. insoweit vorteilhaft sein, als er nach dem Einbau in dem Wand- oder Bodenelement verbleiben kann.

In bevorzugter Ausgestaltung ist an einer Außenwandfläche des trichterförmigen Hohlkörpers eine Stegdichtung angeordnet, die aus dem gleichen Verformungselementmaterial wie das Verformungselement gebildet ist. Bevorzugt werden das Verformungselement und die Stegdichtung aus derselben Komponente im selben Schritt spritzgegossen. Die Stegdichtung ist bevorzugt vollständig umlaufend in sich geschlossen und kann Kriechpfade entlang der Außenwandfläche des Formteils verlängern bzw. blockieren. Bevorzugt kann insbesondere eine Ausgestaltung als Mehrfach-Stegdichtung mit mehreren umlaufenden Stegen sein, also mindestens zwei und bspw. nicht mehr als fünf bzw. vier umlaufenden Stegen. Die Stegdichtung ist bevorzugt in einem axialen Abschnitt des trichterförmigen Hohlkörpers angeordnet, wo dieser Trichter bereits einen erweiterten, insbesondere seinen maximalen Außendurchmesser erreicht hat. Dies bedeutet umgekehrt, dass die Stegdichtung dann relativ nahe an der Seitenfläche des Wand- oder Bodenelements angeordnet ist, was bspw. hinsichtlich der Wassereindringtiefe in Beton bei an der entgegengesetzten Seitenfläche des Wand- oder Bodenelements anstehendem Wasser vorteilhaft sein kann.

Bei einer bevorzugten Ausführungsform ist in dem trichterförmigen Hohlkörper ein gesonderter Formkörper angeordnet, vorzugsweise ein Schaumstoffkörper. Dieser kann bspw. aus Polystyrolschaum, also geschäutem Polystyrol, vorgesehen sein. Der Formkörper kann bereits beim Einbau, also beim Vergießen von Rohrelement und Einbauteil, in dem Trichter angeordnet sein. Im Falle eines Bodenelements kann er aber insbesondere auch nach dem eigentlichen Einbau von Vorteil sein, nämlich auf der Baustelle ein unbeabsichtigtes Hineintreten durch einen Bauarbeiter verhindern und damit die Unfallgefahr reduzieren helfen.

Die Erfindung betrifft auch die Herstellung eines Wand- oder Bodenelements mit Rohrelement und Einbauteil darin, wobei das Wand- oder Bodenelement in einer vorliegend geschilderten Weise hergestellt wird.

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Fig. 1: ein gemeinsam mit einem Rohrelement eingebautes Einbauteil in einer Seitenansicht;
- Fig. 2: die Anordnung gemäß Fig. 1 in einer geschnittenen Schrägansicht;
- Fig. 3: das Einbauteil gemäß den Fig. 1 und 2 ohne das Rohrelement, wiederum in einer geschnittenen Schrägansicht;
- Fig. 4: das Einbauteil in einer Detailansicht;
- Fig. 5: nur einen Teil des Einbauteils, nämlich das formgebende Formteil.

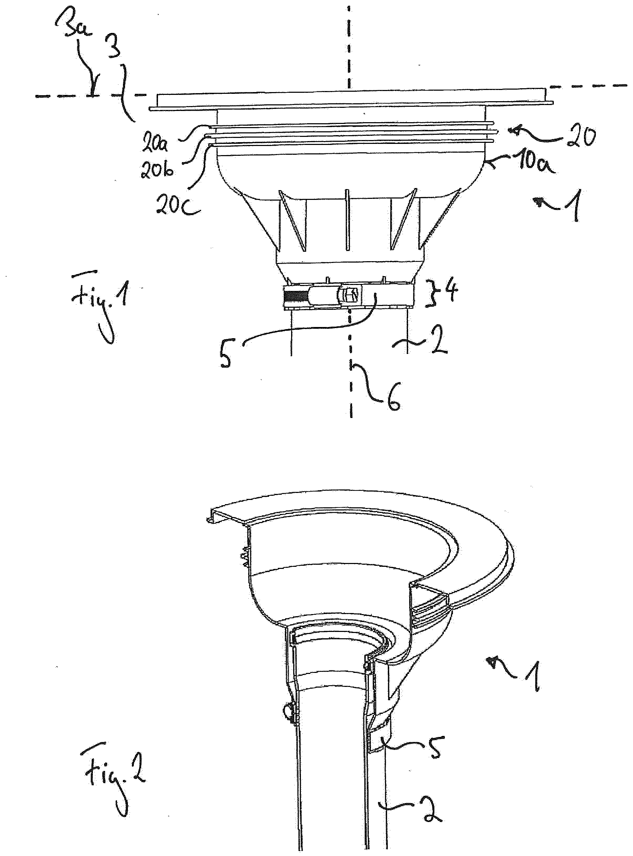

Fig. 1 zeigt ein Einbauteil 1, das auf ein Rohrelement 2 gesetzt und gemeinsam mit diesem in ein Bodenelement 3 eingebaut ist. Das Bodenelement 3 ist lediglich angedeutet, konkret die Bodenfläche strichliert. Es handelt sich dabei um eine aus Beton gegossene Bodenplatte, der Beton umschließt das Rohrelement 2 und auch das Einbauteil 1.

Das Einbauteil 1 weist einen Rohrstutzen 4 auf (siehe unten im Detail), über diesen ist das Einbauteil 1 an dem Rohrelement 2 befestigt. Dazu ist an einer Außenwandfläche des Rohrstutzens 4 als Spannring 5 eine Spannschelle angeordnet, durch Anziehen der Spannschelle wird der Rohrstutzen 4 auf das Rohrelement 2 gedrückt, nach innen zur Rohrachse 6 hin. Bei dem Rohrelement 2 handelt es sich um ein sogenanntes Kanalgrundrohr (KG-Rohr), vgl. insbesondere auch die geschnittene Schrägansicht gemäß Fig. 2 (die folgenden Anmerkungen betreffen Fig. 1 und Fig. 2 gleichermaßen).

Das Einbauteil 1 ist auf ein Muffenende des Rohrelements 2 gesetzt und hält um dieses Muffenende eine Ausnehmung in dem erstarrten Beton frei, die an eine Seitenfläche 3a, also die Bodenfläche des Bodenelements 3, grenzt. Nach dem Einbetonieren liegt das Muffenende dann also ein Stück weit zurückversetzt in dem Bodenelement 3. Das Rohrelement 2 kann nach dem Vergießen und Härten des Betons durch Einschieben eines Rohrstücks in das Muffenende ins Gebäudeinnere verlängert werden (in den Figuren nach oben), wobei die Ausnehmung hierbei etwas Spiel bietet, also auch eine gekrümmte Leitungsführung ermöglicht. Es können so zwei Rohrbögen desselben Winkels eingesetzt werden, womit sich ein Horizontalversatz ausgleichen lässt; es wird ausdrücklich auch auf die Anmerkungen in der Beschreibungseinleitung verwiesen.

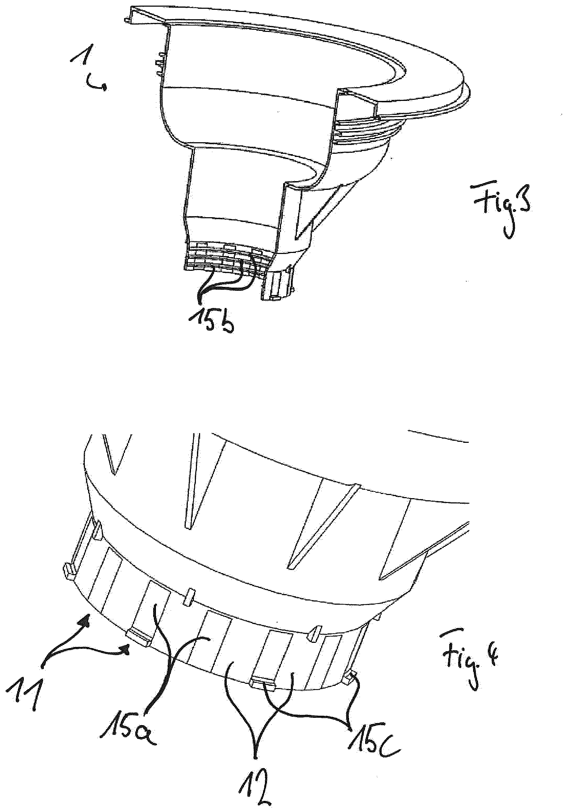

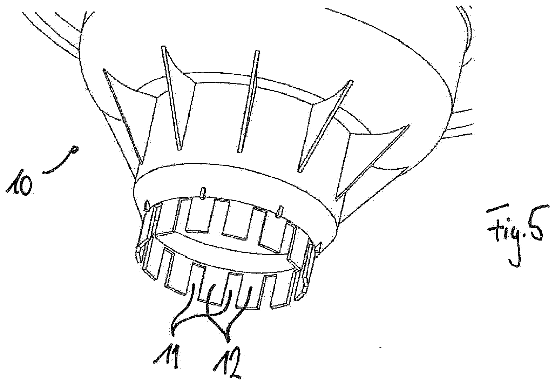

Fig. 3 zeigt das Einbauteil 1 für sich, also ohne den Spannring 5 und das Rohrelement 2. Das Einbauteil 1 ist ein Zweikomponenten-Spritzgussteil. Die formgebende Hartkomponente ist vorliegend ABS, an die ein thermoplastischer Elastomer (TPE) als Weichkomponente angespritzt ist. In Fig. 5 ist zur Illustration allein die Hartkomponente dargestellt, diese bildet ein Formteil 10. Im Bereich des Rohrstutzens 4 ist das Formteil 10 umlaufend nicht durchgehend ausgebildet, sondern durch Trennfugen 11 in Spannabschnitte 12 untergliedert. Diese Spannabschnitte 12 können trotz der Herstellung aus der Hartkomponente ein Stück weit radial, zur Rohrachse 6 des Rohrstutzens 4 hin ausgelenkt werden.

Wie insbesondere aus Fig. 4 ersichtlich, sind die Trennfugen 11 des Formteils 10 mit einem aus der Weichkomponente gebildeten Verformungselement 15a,b,c aufgefüllt. Bei Betrachtung des Einbauteils 1 im Gesamten sind die Trennfugen 11 also geschlossen, und zwar mit der Weichkomponente. Diese Ausgestaltung hilft die Vorteile der Hartkomponente (formgebend, stabil) mit jenen der Weichkomponente (selbst anlegend, dichtend) zu verbinden. Wie aus Fig. 3 ersichtlich, bildet das Verformungselement 15a,b,c nicht nur die in den Trennfugen 11 angeordneten Abschnitte 15a, sondern auch innenseitig umlaufende, sich jeweils über die Spannabschnitte 12 hinweg erstreckende Dichtstege 15b, vorliegend drei Dichtstege 15b. Das Verformungselement 15a,b,c dichtet dann auch das Einbauteil 1 und das Rohrelement 2 gegeneinander.

Aus Fig. 4 ist ferner ersichtlich, dass das Verformungselement 15a,b,c auch einen Anschlag 15c bildet. Dieser hält den Spannring 5 in Position, verhindert also ein axiales Verrutschen. Aus der Weichkomponente ist ferner eine umlaufende Stegdichtung 20 mit vorliegend drei umlaufenden Dichtstegen 20a,b,c an eine Außenwandfläche 10a des Formteils 10 angespritzt, und zwar in dessen trichterförmig geweiteten Abschnitt, vgl. Fig. 1.

## Patentansprüche

1. Verwendung eines Einbauteils (1) und eines Rohrelements (2) zum gemeinsam Einbauen in ein Wand- oder Bodenelement (3),
welches Einbauteil (1) einen Rohrstutzen (4) aufweist, der von einem formgebenden Formteil (10) und einem demgegenüber weicheren Verformungselement (15a,b,c) gebildet wird,
wobei das Formteil (10) und das Verformungselement (15a,b,c) einstückig miteinander ausgebildet sind,
bei welcher Verwendung das Rohrelement (2) und das Einbauteil (1) in zusammengesetzter Form, nämlich bei in dem Rohrstutzen (4) des Einbauteils (1) angeordnetem Rohrelement (2), durch Umfüllen mit zunächst fließfähigem und dann erstarrendem Umfüllmaterial in das Wand- oder Bodenelement (3) eingebaut werden,
**dadurch gekennzeichnet, dass** sich das Formteil (10) bezogen auf eine Rohrachse (6) des Rohrstutzens (4) umlaufend in eine Mehrzahl Spannabschnitte (12) gliedert und jeweils zwischen den Spannabschnitten (12) durch eine Trennfuge (11) derart unterbrochen ist, dass die Spannabschnitte (12) bezogen auf die Rohrachse (6) des Rohrstutzens (4) radial auslenkbar sind,
und wobei sich das Verformungselement (15a,b,c) bezogen auf die Rohrachse (6) des Rohrstutzens (10) jeweils radial gesehen zumindest bereichsweise über die Trennfugen (11) hinweg erstreckt.

2. Verwendung nach Anspruch 1, bei welcher sich das Verformungselement (15a,b,c) zumindest anteilig auch jeweils in den Trennfugen (11) erstreckt, also bezogen auf die Rohrachse (6) des Rohrstutzens (4) jeweils umlaufend zwischen den Spannabschnitten (12).

3. Verwendung nach Anspruch 1 oder 2, bei welcher die Trennfugen (11) bezogen auf die Rohrachse (6) des Rohrstutzens (4) jeweils axial zu einem Ende hin offen sind.

4. Verwendung nach einem der vorstehenden Ansprüche, bei welcher die Trennfugen (11) jeweils die Form eines durchgehenden Schlitzes haben.

5. Verwendung nach einem der vorstehenden Ansprüche, bei welcher sich das Verformungselement (15a,b,c) jeweils bezogen auf die Rohrachse (6) des Rohrstutzens (4) vollständig umlaufend erstreckt, und zwar zumindest anteilig auch radial innerhalb der Spannabschnitte (12) über diese hinweg.

6. Verwendung nach Anspruch 5, bei welcher das Verformungselement (15a,b,c) einen Dichtsteg (15b) bildet, der jeweils bezogen auf die Rohrachse (6) des Rohrstutzens (4) in einem axial begrenzten Bereich einer Innenwandfläche des Rohrstutzens (4) nach radial innen hervortritt.

7. Verwendung nach einem der vorstehenden Ansprüche, bei welcher, jeweils um die Rohrachse (6) des Rohrstutzens (4) umlaufend genommen, zumindest einer der Spannabschnitte (12) und zumindest eine der Trennfugen (11) eine jeweilige Weite haben und die Weite der zumindest einen Trennfuge (11) zu der Weite des zumindest einen Spannabschnitts (12) in einem Verhältnis von mindestens 1:5 steht.

8. Verwendung nach einem der vorstehenden Ansprüche, bei welcher zumindest einer der Spannabschnitte (12) bezogen auf die Rohrachse (6) des Rohrstutzens (4) eine axiale Erstreckung hat, die mindestens dem 0,05-fachen eines Außendurchmessers des Rohrelements (2) entspricht.

9. Verwendung nach einem der vorstehenden Ansprüche, bei welcher an einer Außenwandfläche des Rohrstutzens (4) ein Spannring (5) angeordnet ist, mit welchem die Spannabschnitte (12) nach radial innen gedrückt werden, wobei an der Außenwandfläche des Rohrstutzens (4) bevorzugt ein Anschlag (15c) ausgebildet ist, der ein axiales Verrutschen des unverspannten Spannrings (5) begrenzt.

10. Verwendung nach einem der vorstehenden Ansprüche, bei welcher das Einbauteil (1) ein Mehrkomponenten-Spritzgussteil ist, wobei das Formteil (10) und das Verformungselement (15a,b,c) aus unterschiedlichen Komponenten spritzgegossen sind.

11. Verwendung nach einem der vorstehenden Ansprüche, bei welcher das Einbauteil (1) in dem dann erstarrten Umfüllmaterial eine Ausnehmung freihält, die an eine Seitenfläche (3a) des Wand- oder Bodenelements (3) grenzt und deren Durchmesser um mindestens 30 % größer als ein Außendurchmesser des Rohrelements (2) ist.

12. Verwendung nach Anspruch 11, bei welcher das Formteil (10) des Einbauteils (1) an einem dem Rohrstutzen (4) bezogen auf die Rohrachse (6) des Rohrstutzens (4) axial entgegengesetzten Ende einen trichterförmigen Hohlkörper bildet, der sich von dem Rohrstutzen (4) weg weitet.

13. Verwendung nach Anspruch 12, bei welcher an einer Außenwandfläche (10a) des trichterförmigen Hohlkörpers eine umlaufende Stegdichtung (20) angeordnet ist, die aus dem gleichen Material wie das Verformungselement (15a,b,c) gebildet ist.

14. Verwendung nach Anspruch 12 oder 13, bei welcher das Einbauteil (1) und das Rohrelement (2) in ein Bodenelement (3) eingebaut werden, wobei in dem trichterförmigen Hohlkörper ein Formkörper angeordnet wird, vorzugsweise aus Schaumstoff.

15. Verfahren zum Herstellen eines Wand- oder Bodenelements (3), in das ein Einbauteil (1) und ein Rohrelement (2) gemeinsam eingebaut sind, wobei das Einbauteil (1) und das Rohrelement (2) gemäß einer Verwendung nach einem der vorstehenden Ansprüche in zusammengesetzter Form durch Umfüllen mit zunächst fließfähigem und dann erstarrendem Umfüllmaterial in das Wand- oder Bodenelement (3) eingebaut werden.

## Claims

1. A use of an installation part (1) and a pipe element (2) for a joint installation in a wall or floor element (3),
which installation part (1) comprises a pipe socket (4) which is formed by a form defining forming part (10) and a deformation element (15a, b, c) which is softer by comparison,
wherein the forming part (10) and the deformation element (15a, b, c) are formed one-piece with each other,
in which use the pipe element (2) and the installation part (1) are installed in assembled form into the wall or floor element (3), namely with the pipe element (2) arranged in the pipe socket (4) of the installation part (1), by filling with initially flowable and then solidifying fill material around it, **characterized in that** the forming part (10) is structured circumferentially in a plurality of clamping sections (12) with regard to a pipe axis (6) of the pipe socket (4) and is respectively interrupted between the clamping sections (12) by a parting line (11) such that the clamping sections (12) are radially deflectable with regard to the pipe axis (6) of the pipe socket (4),
and wherein the deformation element (15a, b, c), viewed radially with regard to the pipe axis (6) of the pipe socket (10) in each case, extends at least locally across the parting lines (11).

2. The use according to claim 1, in which the deformation element (15a, b, c) also extends at least partially into the parting lines (11), that is in each case circumferentially between the clamping sections (12) with regard to the pipe axis (6) of the pipe socket (4).

3. The use according to claim 1 or 2, in which the parting lines (11) are each open axially towards one end with regard to the pipe axis (6) of the pipe socket (4).

4. The use according to one of the preceding claims, in which the parting lines (11) each have the shape of a continuous slit.

5. The use according to one of the preceding claims, in which the deformation element (15a, b, c) extends completely circumferentially, namely at least partially radially within the clamping sections (12) across them, respectively with regard to the pipe axis (6) of the pipe socket (4).

6. The use according to claim 5, in which the deformation element (15a, b, c) forms a protruding seal (15b) which, in an axially limited area of an inner wall surface of the pipe socket (4) protrudes radially inwards, each with regard to the pipe axis (6) of the pipe socket (4).

7. The use according to one of the preceding claims, in which, at least one of the clamping sections (12) and at least one of the parting lines (11) have a respective width, in each case taken circumferentially around the pipe axis (6) of the pipe socket (4), and the width of the at least one parting line (11) has a ratio of at least 1:5 to the width of the at least one clamping section (12).

8. The use according to one of the preceding claims, in which at least one of the clamping sections (12) has an axial extent which corresponds to at least 0.05 times of an outer diameter of the pipe element (2) with regard to the pipe axis (6) of the pipe socket (4).

9. The use according to one of the preceding claims, in which a clamping ring (5) is arranged on an outer wall surface of the pipe socket (4), with which the clamping sections (12) are pressed radially inward, wherein preferably a stop (15c) is formed on the outer wall surface of the pipe socket (4), which limits an axial slipping of the untensioned clamping ring (5).

10. The use according to one of the preceding claims, in which the installation part (1) is a multi-component injection-moulded part, wherein the forming part (10) and the deformation element (15a, b, c) are injection-moulded from different components.

11. The use according to one of the preceding claims, in which the installation part (1) keeps a recess free adjacent to a side surface (3a) of the wall or floor element (3) in the subsequently solidified fill material and the diameter of the recess is at least 30% larger than an outer diameter of the pipe element (2).

12. The use according to claim 11, in which the forming part (10) of the installation part (1) forms a funnel-shaped hollow body at an end axially opposite the pipe socket (4) with regard to the pipe axis (6) of the pipe socket (4), which end widens away from the pipe socket (4).

13. The use according to claim 12, in which a circumferential protruding seal (20) is arranged on an outer wall surface (10a) of the funnel-shaped hollow body, which protruding seal is formed from the same material as the deformation element (15a, b, c).

14. The use according to claim 12 or 13, in which the installation part (1) and the pipe element (2) are installed in a floor element (3), wherein a form body, preferably made of foam, is arranged in the funnel-shaped hollow body.

15. A method for manufacturing a wall or floor element (3) in which a installation part (1) and a pipe element (2) are installed together, wherein the installation part (1) and the pipe element (2) in assembled form are built into the wall or floor element (3) according to a use according to one of the preceding claims by filling with initially flowable and subsequently solidifying fill material around it.

## Revendications

1. Utilisation d'une pièce encastrable (1) et d'un élément tubulaire (2) pour encastrement conjoint dans un élément de mur ou de sol (3),
laquelle pièce encastrable (1) présente une tubulure (4) constituée par une pièce formée (10) conformatrice et un élément déformable (15a,b,c) comparativement plus mou,
ladite pièce formée (10) et ledit élément déformable (15a,b,c) étant conçus d'un seul tenant,
dans laquelle utilisation l'élément tubulaire (2) et la pièce encastrable (1), une fois assemblés, c'est-à-dire lorsque l'élément tubulaire (2) est agencé dans la tubulure (4) de la pièce encastrable (1), sont encastrés par scellement dans l'élément de mur ou de sol (3) à l'aide d'un matériau de scellement tout d'abord fluide puis solidifié,
**caractérisé en ce que** la pièce formée (10) se divise sur sa circonférence, eu égard à un axe de tube (6) de la tubulure (4), en une pluralité de sections de resserrage (12) et est interrompue, entre les sections de resserrage (12), par un joint de séparation (11) permettant aux sections de resserrage (12) de subir une déviation radiale eu égard à l'axe de tube (6) de la tubulure (4),
ledit élément déformable (15a,b,c), eu égard à l'axe de tube (6) de la tubulure (10), dépassant au moins partiellement des joints de séparation (11) dans un sens radial respectif.

2. Utilisation selon la revendication 1, dans laquelle l'élément déformable (15a,b,c) s'étend respectivement au moins pour partie également dans les joints de séparation (11), et ce, de façon respectivement circonférentielle, eu égard à l'axe de tube (6) de la tubulure (4), entre les sections de resserrage (12).

3. Utilisation selon la revendication 1 ou 2, dans laquelle les joints de séparation (11) sont respectivement ouverts à une extrémité axiale, eu égard à l'axe de tube (6) de la tubulure (4).

4. Utilisation selon l'une des revendications précédentes, dans laquelle les joints de séparation (11) ont respectivement la forme d'une fente traversante.

5. Utilisation selon l'une des revendications précédentes, dans laquelle l'élément déformable (15a,b,c) s'étend respectivement sur toute la circonférence, eu égard à l'axe de tube (6) de la tubulure (4), en dépassant des sections de resserrage (12) au moins pour partie également radialement à l'intérieur de celles-ci.

6. Utilisation selon la revendication 5, dans laquelle l'élément déformable (15a,b,c) constitue un ressaut d'étanchéité (15b) faisant respectivement saillie radialement vers l'intérieur, eu égard à l'axe de tube (6) de la tubulure (4), dans une zone axialement limitée d'une surface de paroi intérieure de la tubulure (4).

7. Utilisation selon l'une des revendications précédentes, dans laquelle, pris respectivement dans le sens circonférentiel autour de l'axe de tube (6) de la tubulure (4), au moins une des sections de resserrage (12) et au moins un des joints de séparation (11) présentent une largeur respective et le rapport de la largeur de l'au moins un joint de séparation (11) à la largeur de l'au moins une section de resserrage (12) est d'au moins 1:5.

8. Utilisation selon l'une des revendications précédentes, dans laquelle au moins une des sections de resserrage (12) présente, eu égard à l'axe de tube (6) de la tubulure (4), une étendue axiale correspondant à au moins 0,05 fois un diamètre extérieur de l'élément tubulaire (2).

9. Utilisation selon l'une des revendications précédentes, dans laquelle il est disposé une bague de serrage (5) sur une surface de paroi extérieure de la tubulure (4), à l'aide de laquelle les sections de resserrage (12) sont comprimées radialement vers l'intérieur, de préférence une butée (15c) étant constituée sur la surface de paroi extérieure de la tubulure (4) pour limiter un glissement axial de la bague de serrage (5) à l'état non serré.

10. Utilisation selon l'une des revendications précédentes, dans laquelle la pièce encastrable (1) est une pièce moulée par injection multicomposant, ladite pièce formée (10) et ledit élément déformable (15a,b,c) étant moulés par injection à partir de composants différents.

11. Utilisation selon l'une des revendications précédentes, dans laquelle la pièce encastrable (1) dégage un évidement dans le matériau de scellement ensuite solidifié, qui borde une surface latérale (3a) de l'élément de mur ou de sol (3) et dont le diamètre est au moins 30 % supérieur au diamètre extérieur de l'élément tubulaire (2).

12. Utilisation selon la revendication 11, dans laquelle la pièce formée (10) de la pièce encastrable (1) constitue, sur une extrémité axialement opposée à la tubulure (4), eu égard à l'axe de tube (6) de la tubulure (4), un corps creux en forme d'entonnoir qui va en s'élargissant à partir de la tubulure (4).

13. Utilisation selon la revendication 12, dans laquelle il est agencé un joint à nervures (20) circonférentiel sur une surface de paroi extérieure (10a) du corps creux en forme d'entonnoir, lequel joint est constitué à partir du même matériau que celui de l'élément déformable (15a,b,c).

14. Utilisation selon la revendication 12 ou 13, dans laquelle la pièce encastrable (1) et l'élément tubulaire (2) sont encastrés dans un élément de sol (3), un corps formé, de préférence en mousse, étant agencé dans le corps creux en forme d'entonnoir.

15. Procédé de fabrication d'un élément de mur ou de sol (3) dans lequel sont encastrés conjointement une pièce encastrable (1) et un élément tubulaire (2), ladite pièce encastrable (1) et ledit élément tubulaire (2) étant encastrés, une fois assemblés, dans l'élément de mur ou de sol (3) suivant une utilisation selon l'une des revendications précédentes, par scellement à l'aide d'un matériau de scellement tout d'abord fluide puis solidifié.
